# EUROPÄISCHE PATENTSCHRIFT

(11) **EP 0 990 177 B1**
(45) Veröffentlichungstag und Bekanntmachung des Hinweises auf die Patenterteilung: **22.01.2003**
(21) Anmeldenummer: 98937480.6
(22) Anmeldetag: 12.06.1998
(51) Int. Cl.: G01W 1/16

(54) **ELEKTROMAGNETISCHES MESSSYSTEM FÜR DIE METEOROLOGIE**
METEOROLOGICAL ELECTROMAGNETIC MEASURING SYSTEM
SYSTEME DE MESURE ELECTROMAGNETIQUE POUR LA METEOROLOGIE

(30) Priorität: 15.06.1997 DE 19725212
(43) Veröffentlichungstag der Anmeldung: 05.04.2000
(73) Patentinhaber: Spherics Mess- Und Analysetechnik GMBH, 96215 Lichtenfels (DE)
(72) Erfinder: PABST, Michael, J., D-96231 Staffelstein-Neubanz (DE); GEISLER, Michael, D-99510 Apolda (DE); BUGLA, Gregor, D-96049 Bamberg (DE)
(74) Vertreter: Dreykorn-Lindner, Werner, Dipl.-Ing.
(86) Internationale Anmeldenummer: EP9803563
(87) Internationale Veröffentlichungsnummer: WO98058279

(56) Entgegenhaltungen:
- EP-A- 0 128 572
- WO-A-97/05508
- DE-A- 19 514 465
- US-A- 4 901 564

## Beschreibung

Die Erfindung bezieht sich auf ein elektromagnetisches Meßsystem für die Meteorologie, mit dem Spherics-Signale erfaßt und analysiert werden.

Spherics-Signale sind elektromagnetische Signale in Form von unregelmäßig geformten Strahlungsimpulsen, die von dynamischen Prozessen in der Atmosphäre, beispielsweise im Vorfeld von Gewitter- oder Wetterfronten oder in konvektiven Bewölkungsformen auftreten.

Aus zahlreichen Beobachtungen ist es bekannt, daß die einzelnen Parameter der Spherics-Signale, wie Anzahl, Amplitude und Frequenz der Schwingungen, sowie die Impulsfolgefrequenz, die Häufigkeitsverteilung auf die Frequenzwerte und die Signalformen eng mit den sie auslösenden Wettervorgängen, insbesondere mit der Art und Bewegung von atmosphärischen Luftmassen verknüpft sind.

Bei den bisher bekannten elektromagnetischen Meßsystemen zum Erfassen und Analysieren von Spherics-Signalen handelt es sich um Einzel-Empfänger oder -Sensoren, mit denen systembedingt nur ein grober Rückschluß auf das allgemeine Wettergeschehen erfolgen kann, da bei Empfang eines Spherics-Signales allenfalls die Richtung des Quellorts, nicht jedoch die Signalstärke am Quellort sowie die durch die unterschiedlichen physikalischen Zustände der Atmosphäre längs des Ausbreitungsweges dieses Spherics-Signales erfolgte Veränderung beurteilt werden kann (siehe beispielsweise EP-A-0 128 572).

Der Erfindung liegt nun die Aufgabe zugrunde, ein elektromagnetisches Meßsystem für die Meteorologie anzugeben, mit dem das allgemeine Wettergeschehen als Grundlage für eine Wetterprognose präziser erfaßt werden kann.

Die genannte Aufgabe wird gemäß der Erfindung gelöst mit einem elektromagnetischen Meßsystem für die Meteorologie mit den Merkmalen des Patentanspruches 1. Das erfindungsgemäße elektromagnetische Meßsystem umfaßt eine Mehrzahl von Meßstationen, die räumlich verteilt in einem vorgegebenen Raumgebiet angeordnet sind. Jede Meßstation enthält zumindest einen Spherics-Empfänger zum Empfangen der Spherics-Signale und eine Übertragungseinrichtung zum Übermitteln von in der Meßstation vorliegenden und aus Spherics-Signalen abgeleiteten Meßdaten an eine den Meßstationen zugeordnete zentrale Auswerteeinheit, wobei der mittlere Abstand jeweils benachbarter Meßstationen zur flächendeckenden Erfassung kurzreichweitiger Spherics-Signale weniger als 50 km beträgt.

Die Erfindung beruht nun auf der Überlegung, daß die für Kurzfrist-Prognosen (Nowcast) relevanten atmosphärischen Ereignisse in der Regel zu Spherics-Signalen mit lediglich geringer Reichweite führen. Diese Spherics-Signale haben eine Impulsdauer bis zu einigen 100 µs und bestehen aus einer oder mehreren Schwingungen, deren Schwingungsfrequenz im Bereich zwischen etwa 3 und 100 kHz, also im VLF-Bereich, angesiedelt ist. Die Impulsfolgefrequenz dieser Spherics-Signale kann bis zu einigen 100 Hz betragen. Die maximale Amplitude der Spherics-Signale hängt von der Art und der Entfemung der Signalquelle ab und beträgt für den elektrischen Feldvektor bis zu einigen Volt pro Meter. Die typischen Entladungsstromstärken sind kleiner als 1 kA, so daß die effektive Reichweite maximal etwa 50 km beträgt. Die für die Kurzfrist-Prognose besonders relevanten Spherics-Quellen können somit nur im Nahbereich, d. h. in Entfernungen gemessen werden, die der Größenordnung der Wellenlänge entsprechen, so daß sie aus physikalischen Gründen nicht gepeilt werden können. Damit unterscheiden sich Spherics-Signale deutlich von elektromagnetischen Signalen, die durch Blitze erzeugt werden, da die Entladungsströme in Blitzen um zwei Größenordnungen höher sind und somit eine höhere Reichweite haben und beispielsweise eine Peilung ermöglichen. Durch die erfindungsgemäße Bereitstellung eines entsprechend feinmaschigen Meßnetzes können somit auch die Spherics-Signale mit einer geringen Reichweite flächendeckend erfaßt und für eine zuverlässige und zeitlich und örtlich hochauflösende Wetterprognose genutzt werden.

Die Erfindung geht außerdem von der Überlegung aus, daß die von einer Mehrzahl von Meßstationen, die in Form eines Meßstationsnetzes räumlich verteilt in einem vorgegebenen Raumgebiet angeordnet sind, eine Analyse der Veränderung, die ein Spherics-Signal in der Atmosphäre längs seiner Ausbreitung durch diese erfährt, einen besseren Aufschluß über das allgemeine Wettergeschehen ermöglicht. Insbesondere können durch eine feinmaschige und kontinuierlich erfolgende Messung von Spherics-Signalen neben den aktuellen Wettererscheinungen auch deren Ursachen, beispielsweise Luftbewegungen und Entladungsvorgänge, erfaßt werden, so daß hinsichtlich der künftigen Wetterentwicklung eine insbesondere für kurzfristige Prognosen (typisch 15 Minuten bis 2 Stunden) hohe Treffsicherheit möglich ist. Grundidee der Erfindung ist es somit, ein elektromagnetisches Meßsystem für die Meteorologie einzurichten, dessen Sender durch stochastisch auftretende natürliche Ereignisse innerhalb der Atmosphäre dargestellt werden, und dessen Empfänger durch ein Netz von Meßstationen gebildet werden.

Die Erfindung beruht weiter auf der Überlegung, daß die Spherics-Signale längs ihres Ausbreitungsweges in der Atmosphäre durch lokal unterschiedliche thermodynamische und elektrische Gegebenheiten beeinflußt werden, und sich auf diese Weise ergänzende Rückschlüsse auf das aktuelle Wettergeschehen und die sich daraus ergebenden Folgerungen für eine Prognose ableiten lassen.

Die vom erfindungsgemäßen Meßsystem bereitgestellten Daten geben somit ein flächendeckendes Abbild der schwachen atmosphärischen VLF-Emissionen. Diese Daten können nicht nur als Grundlage für eine zuverlässige Kurzfrist-Wetterprognose sondern darüber hinaus auch als verläßliche Grundlage für die epidemiologische Untersuchung der biotropen Wirkungen von VLF-lmpulsen auf den menschlichen Organismus verwendet werden.

Der mittlere Abstand benachbarter Meßstationen, d. h. die Maschenweite des Meßnetzgitters beträgt vorzugsweise zwischen 10 km und 50 km, insbesondere etwa 30 km. Damit wird eine flächendeckende Erfassung der Spherics-Aktivitäten mit einer Auflösung von etwa 10 km ermöglicht.

In einer bevorzugten Ausgestaltung der Erfindung ist jede Meßstation mit einer Verarbeitungseinheit zum Ableiten von Meßdaten aus den empfangenen Spherics-Signalen vorgesehen. Die Verarbeitungseinheit kann dabei aus einfachen Filtern und/oder analogen Signalbearbeitungsstufen bestehen, mit denen die Signale analog verarbeitet werden, so daß Meßdaten in analoger Form anstehen.

Insbesondere umfaßt die Verarbeitungseinheit einen digitalen Signalprozessor, dem ein Analog-Digital-Wandler vorgeschaltet ist. In diesem Fall können die Spherics-Signale einer digitalen Signalanalyse, beispielsweise einer zusätzlichen digitalen Filterung, insbesondere einer Spektralanalyse oder einer Zeitreihenanalyse aufeinanderfolgender Spherics-Signale, unterzogen werden. Die vom Signalprozessor durch eine solche Analyse abgeleiteten Meßdaten werden dann als digitales Datenwort an die zentrale Auswerteeinheit übermittelt.

Die digitale Signalanalyse wird vorzugsweise mit Hilfe einer geeigneten, insbesondere in einem EPROM abgelegten und von der zentralen Auswerteeinheit femgewarteten Software vorgenommen. In einer weiteren vorteilhaften Ausgestaltung der Erfindung findet im digitalen Signalprozessor eine bewertende Analyse der Spherics-Signale statt, in der diese anhand vorgegebener Bewertungskriterien jeweils einer Aktivitätsklasse zugeordnet werden. Durch den Einsatz derartiger intelligenter Meßstationen kann der Umfang der zu übermittelnden Meßdaten erheblich verringert und deren nachfolgende Bearbeitung erleichert, die beispielsweise in einem schnellen Mustervergleich des von allen Meßstationen an die zentrale Auswerteeinheit aktuell übermittelten Datenbildes des Wettergeschehens mit bereits gespeicherten Datenbildern früherer Wettergeschehen bestehen kann, um aus diesen Vergleich Vorhersagen ableiten zu können.

Insbesondere erfolgt im digitalen Signalprozessor eine Trennung von Spherics-Signalen von technischen Störsignalen vornehmen.

Vorzugsweise ist dem zumindest eine magnetische VLF-Antenne enthaltenden Spherics-Empfänger eine Signalaufbereitungsstufe mit einem analogen Filter nachgeschaltet. Durch diese Maßnahme können nicht auf atmosphärischen Ursachen beruhende Störsignale, sogannte Technics-Signale, bereits vor einer digitalen Signalanalyse zumindest teilweise eliminiert werden, da nur elektromagnetische Signale in den für Spherics-Signale relevanten Frequenzbändern einer weiteren Verarbeitung und Analyse zugeführt werden, so daß der digital zu analysierende Datenumfang reduziert ist.

In der zentralen Auswerteeinheit sind in vorteilhafter Weise Mittel zum Bestimmen des Ortes einer Spherics-Quelle durch Auswertung der Meßdaten einer Mehrzahl benachbarter Meßstationen, beispielsweise mit Hilfe von Clusteralgorithmen, vorgesehen. Dies ermöglicht eine genaue Ortsbestimmung auch im Nahfeldbereich, da die im Nahfeldbereich bei Peil- und Laufzeitverfahren, wie sie beispielsweise in der Blitzortung eingesetzt werden, unvermeidlich auftretenden Fehler vermieden sind.

In einer besonders bevorzugten Ausgestaltung der Erfindung ist zum Bestimmen der Ausrichtung zumindest eines Teiles der Spherics-Empfängers ein zentraler Peilsender vorgesehen.

In einer bevorzugten Ausführungsform enthält der Spherics-Empfänger zwei horizontal und zueinander orthogonal ausgerichtete magnetische VLF-Antennen. Dadurch ist es möglich, vertikal polarisierte Spherics-Signale aus beliebigen Richtungen zu empfangen. Darüber hinaus können längerreichweitige vertikal polarisierte Spherics-Signale oder Spherics-Signale mit einer vertikal polarisierten Komponente, d.h. Spherics-Signale oder -Signalkomponenten, deren elektrischer Feldvektor senkrecht und deren magnetischer Feldvektor parallel zur Erdoberfläche orientiert ist, durch Vergleich der in den zueinander orthogonalen horizontalen magnetischen Antennen empfangenen Signale hinsichtlich ihrer Ausbreitungsrichtung analysiert werden.

In einer weiteren bevorzugten Ausführungsform umfaßt der Spherics-Empfänger in zumindest einem Teil der Meßstationen eine vertikal ausgerichtete magnetische VLF-Antenne. Damit lassen sich auch Spherics-Ereignisse erfassen, die direkt über dem betreffenden Spherics-Empfänger stattfinden.

In einer weiteren vorteilhaften Ausführungsform enthält der Spherics-Empfänger in zumindest einem Teil der Meßstationen eine Dipol-Antenne zum Messen einer Komponente, vorzugsweise der Vertikalkompononente, des elektrischen Feldes. Aus der Messung einer solchen Feldkomponente können weitere Informationen abgeleitet werden. Insbesondere können die Beziehungen zwischen der elektrischen Feldstärke und der Magnetfeldstärke, beispielsweise deren gegenseitige entfernungsabhängige Phasenverschiebung, analysiert wurden.

Insbesondere ist zumindest in einem Teil der Meßstationen ein breitbandiger VLF-Empfänger mit einer Rundfunkantenne zum Empfangen langwelliger Rundfunksignale vorgesehen. Dadurch können zur Analyse des Zustandes der Atmosphäre neben den atmosphärischen Sendern auch Rundfunksender herangezogen werden. Die von den mit breitbandigen Rundfunkantennen ausgestatteten Meßstationen empfangenen Rundfunksignale können dann in der zentralen Auswerteeinheit untereinander verglichen werden. Aus dem Vergleich können dann Rückschlüsse über die atmosphärischen Bedingungen längs des Ausbreitungsweges des Rundfunksignales gefolgert werden.

In einer weiteren vorteilhaften Ausführungsform umfaßt die Meßstation zumindest einen weiteren Meßwertaufnehmer zum Erfassen einer weiteren lokalen Meßgröße. Eine solche lokale Meßgröße kann beispielsweise der Druck, die Temperatur, die Leitfähigkeit, die Feuchte, die solare Einstrahlung oder das Stattfinden eines Niederschlags sein.

In einer bevorzugten Ausgestaltung umfaßt zumindest ein Teil der Meßstationen ein Meßsystem zum Erfassen ihrer aktuellen räumlichen Position. Dieses Meßsystem kann beispielsweise ein GPS-Meßsystem sein. Dadurch ist es auch möglich, Meßstationen einzubeziehen, deren Ort nicht exakt festgelegt ist, beispielsweise seegestützte Meßstationen oder Meßstationen in Wetterballonen.

Die Übertragungseinrichtung ist in einer bevorzugten Ausgestaltung der Erfindung ereignisgesteuert, d.h. eine Übertragung findet nur dann statt, wenn von der Meßstation ein Ereignis, d.h. ein Spherics-Signal, registriert wird. Dadurch kann die Anzahl der zur Auswerteeinheit übertragenen Meßdaten und somit auch der in der Verarbeitungseinheit erforderliche Rechenaufwand verringert werden.

Insbesondere ist die Übertragungseinrichtung zeitgesteuert aktivierbar, so daß ein zeitlich lückenloses Abbild der atmosphärischen Prozesse im gesamten von den Meßstationen erfaßten Raumgebiet möglich ist.

Zusätzlich kann ein Teil der Meßstationen mit einem VHF/UHF-Empfänger ausgestattet sein, um atmosphärische Einflüsse im HF-Bereich zu messen.

In einer besonders bevorzugten Ausgestaltung der Erfindung enthält zumindest ein Teil der Meßstationen ein Array jeweils gleichartiger Spherics-Empfänger, die in vorgegebenen Abständen, insbesondere zwischen 1 und 20 m, zueinander angeordnet sind. Durch diese Maßnahmen können kurzreichweitige technische Störsignale einfach von längerreichweitigen echten Spherics-Signalen getrennt werden, indem nur die Signale, die in allen Spherics-Empfängern koinzident auftreten, einer Weiterverarbeitung zugeführt werden.

Zur weiteren Erläuterung der Erfindung wird auf das Ausführungsbeispiel der Zeichnung verwiesen. Es zeigen:
- Fig. 1: ein elektromagnetisches Meßsystem gemäß der Erfindung mit einer Vielzahl von in einem Raumgebiet verteilten Meßstationen in einer schematischen Prinzipdarstellung,
- Fig. 2: eine bevorzugte Ausgestaltung einer Meßstation, wie sie in dem elektromagnetisches Meßsystem gemäß der Erfindung zum Einsatz gelangt.

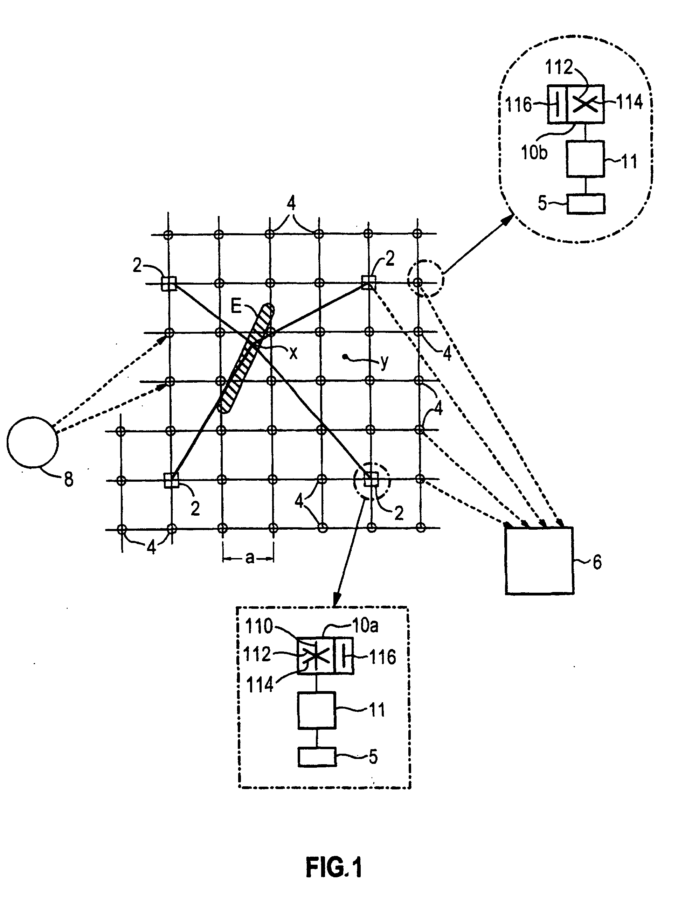

Gemäß Fig. 1 sind in einem Raumgebiet eine Vielzahl von Meßstationen 2,4 netzartig angeordnet. Im Beispiel der Figur bilden die Meßstationen 2,4 ein quadratisches Gitternetz. Die Meßstationen 2,4 müssen jedoch nicht in einem solchen quadratischen Gittemetz angeordnet sein. Der mittlere Abstand a der Meßstationen 2,4 untereinander, der im dargestellten quadratischen Gitter der Maschenweite des Gitters entspricht, beträgt weniger als 50 km, vorzugsweise zwischen 10 km und 50 km, insbesondere etwa 30 km, so daß sichergestellt ist, daß die kurzreichweitigen Spherics-Signale von zumindest einigen benachbarten Meßstationen 2,4 erfaßt werden können.

Jede Meßstation 2,4 enthält eine Übertragungseinrichtung 5, die die in den Meßstationen 2,4 vorliegenden und aus den Spherics-Signalen sowie aus gegebenenfalls aufgenommenen weiteren Meßgrößen abgeleiteten Meßdaten an eine zentrale Auswerteeinheit 6 überträgt.

Ein ortsfester Peilsender 8, beispielsweise der Zeitzeichensender DCF77 in Mainfingen, dient zur Überwachung der Ausrichtung der in den Meßstationen 2,4 befindlichen Empfangsantennen.

Die zeichnerisch mit einem Quadrat dargestellten Meßstationen 2 unterscheiden sich von den mit einem Kreis dargestellten Meßstationen 4 dahingehend, daß die zuerst genannten Meßstationen 2 über einen Spherics-Empfänger 10a verfügen, der eine vertikale und zwei orthogonal zueinander und horizontal angeordnete magnetische Antennen 110 bzw. 112, 114, beispielsweise Ferritantennen oder Luftspulenantennen, umfaßt. Die Meßstationen 4 verfügen demgegenüber über einen Spherics-Empfänger 10 b, der nur zwei horizontale magnetische VLF-Antennen 112,114 umfaßt und mit dem die Messung einer vertikalen Magnetfeldkomponente nicht möglich ist. Das aus den Meßstationen 2 gebildete Teilnetz ist dabei nicht so engmaschig, wie das aus den Meßstationen 4 gebildete Teilnetz, da die vom Spherics-Empfänger 10a zusätzlich empfangenen vertikalen Magnetfeldkomponenten in der Regel nur zu Spherics-Ereignissen gehören, die in der Atmosphäre unmittelbar über der betreffenden Meßstation 2 stattfinden und somit bereits von den horizontalen magnetischen VLF-Antennen 112,114 der benachbarten Meßstationen erfaßt werden.

Die Spherics-Empfänger 10a,10b eines Teils der Meßstationen 2 bzw. 4 können außerdem mit einer vertikalen Dipolantenne 116 ausgestattet werden sein, um zusätzlich zu den Horizontalkomponenten des Magnetfeldes auch noch die vertikale Komponente des elektrischen Feldes zu messen.

Jede Meßstation 2,4 ist mit einer Verarbeitungseinheit 11 ausgestattet, in der die empfangenen Spherics-Signale zu analogen oder digitalen Daten verarbeitet werden, die dann über die Übertragungseinrichtung 5, beispielsweise ein Telefonmodem oder ein Funksender, an die zentrale Auswerteeinheit 6 übermittelt werden. Eine solche Verarbeitungseinrichtung 11 kann in einem einfachen Fall lediglich aus einem analogen Rechenwerk, beispielsweise einem Filter bestehen.

Wenigstens ein Teil der Meßstationen 2,4 enthält anstelle eines einzigen Spherics-Empfängers 10a oder 10b jeweils ein lineares oder matrixförmiges Array gleichartiger Spherics-Empfänger 10a bzw. 10b, die in Abständen von etwa 1 bis 20 m zueinander angeordnet sind. Durch diese Maßnahme können auf einfache Weise technisch erzeugte VLF-lmpulse mit Reichweiten von wenigen Metern von echten Spherics-Signalen mit Reichweiten von mehreren Kilometern separiert werden.

Die Verarbeitungseinheit 11 kann in einer alternativen Ausgestaltung die digitalisierten in einem digitalen Signalprozessor Spherics-Signale selbst einer weiteren digitalen Signalverarbeitung unterziehen, bevor sie diese an die zentrale Auswerteeinheit 6 übermittelt.

In der Figur ist - durch Schraffur hervorgehoben - ein atmosphärisches Ereignis E, beispielsweise eine entstehende Kaltfront, eingezeichnet. In einer solchen Kaltfront finden charakteristische Entladungsprozesse statt, die die Ursache von für diesen Vorgang charakteristischen Spherics-Signalen sind. Die Erfahrung zeigt nun, daß das Vorhandensein einer solchen Kaltfront vor allem zu relativ langwelligen vertikal polarisierten Spherics-Signalen führt. Mit Hilfe der Meßstationen 2,4 kann somit der Ort x des ein vertikal polarisiertes Spherics-Signal auslösenden Ereignisses ermittelt werden, wobei im Prinzip bereits der Empfang des Spherics-Signales in zwei Meßstationen 2,4 ausreicht. Die von den Meßstationen 2,4 empfangenen, hinsichtlich ihres Entstehungsortes und Erscheinungsbildes analysierten Spherics-Signale ermöglichen nun die Aussage, daß sich am Ort x eine Kaltfront befindet. Die in der Umgebung des Ereignisses E, im Beispiel die Kaltfront, befindlichen Meßstationen 2 empfangen insbesondere mit ihren vertikalen VLF-Antennen 110 zusätzlich schwache horizontal polarisierte Spherics-Signale, deren Signalverlauf, Signalhäufigkeit und Signaldauer einen Rückschluß darüber ermöglichen, ob die Kaltfront im Entstehen oder im Vorrücken begriffen ist. Durch die flächenmäßige Verteilung einer Vielzahl von Meßstationen 2,4 ist es somit möglich, umfassende Informationen über das Wettergeschehen zu erhalten, die als Grundlage für eine sichere kurzfristige Wetterprognose dienen kann. So sind bei Verwendung einer solchen erfindungsgemäßen Einrichtung präzise Vorhersagen dahingehend möglich, daß das Entstehen einer Kaltfront an einem Ort y präzise für einen Zeitraum von einer halben Stunde bis zu mehreren Stunden vorhergesagt werden kann.

Eine Ortsbestimmung der Spherics-Signale durch Peilung ist jedoch nur für längerreichweitige Spherics-Signale möglich. Die Bestimmung des Quellortes kurzreichweitiger Spherics-Signale erfolgt deshalb in der zentralen Auswerteeinheit 6 durch Auswerten der voneinander benachbarten Meßstationen 2,4 empfangenen Impulsrate- und Leistungsdichtedaten mit Hilfe sogenannter Clusteralgorithmen.

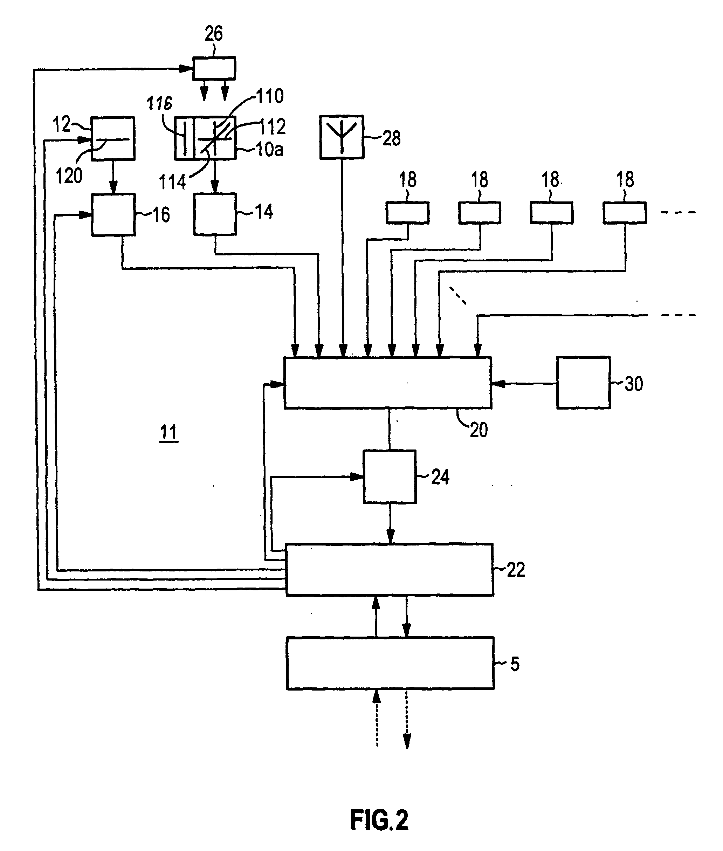

Gemäß Fig. 2 enthält die Meßstation 2 zumindest einen mit drei magnetischen VFL-Antennen 110,112,114 ausgestatteten Spherics-Empfänger 10a sowie einen zusätzlichen breitbandigen VLF-Empfänger 12 mit einer horizontalen Rundfunkantenne 120. In der Figur ist außerdem zu erkennen, daß der Spherics-Empfänger 10a zusätzlich mit einer Dipol-Antenne 116 ausgestattet ist.

Dem Spherics-Empfänger 10a ist eine Signalaufbereitungsstufe 14 zugeordnet, die beispielsweise analoge Filter enthält, um die Spherics-Signale von technischen Störsignalen (Technics-Signale) zu trennen. In einer alternativen vorteilhaften Ausgestaltung sind in der Meßstation 2 mehrere Spherics-Empfänger 10a arrayförmig angeordnet, wie dies durch Punkte angedeutet ist. Durch diese Maßnahme können Spherics-Signale von technischen Störsignalen besonders einfach und zuverlässig getrennt werden.

Dem VLF-Empfänger 12 ist ein steuerbares Filter 16 nachgeschaltet, mit dem er auf den jeweiligen Sender abgeglichen werden kann. Außerdem kann die Rundfunkantenne des VLF-Empfängers 12 über den Signalprozessor 22 von der zentralen Auswerteeinheit 6 ferngesteuert werden.

In der Meßstation sind noch eine Reihe weiterer Meßwertaufnehmer 18 vorgesehen, mit denen weitere örtliche Meßgrößen, beispielsweise Temperatur, Luftdruck, relative Luftfeuchte, elektrische Leitfähigkeit der Atmosphäre, erfaßt werden.

Signalaufbereitungsstufe 14, steuerbarer Filter 16 sowie Meßwertaufnehmer 18 sind mit ihrem Ausgang an einen Multiplexer 20 angeschlossen, dessen Adress-eingang von einem Signalprozessor 22 angesteuert wird, so daß am Ausgang des Multiplexers 20 jeweils nur das dem aktuellen Adresseneingang zugehörige Signal ansteht. Das am Ausgang des Multiplexers 20 anstehende Meßsignal wird über einen Analog-Digital-Wandler 24 dem Signalprozessor 22 zugeführt.

Dem Spherics-Empfänger 10a ist außerdem ein Sender 26 zugeordnet, der vom Signalprozessor 22 gesteuert vorgegebene Sendesignale zum Selbsttesten des Spherics-Empfängers 10a aussendet.

Im Signalprozessor 22 findet eine Analyse der anstehenden Meßdaten, insbesondere der Spherics-Signale statt. Diese Analyse kann darin bestehen, daß anhand von Plausibilitätskontrollen "unechte" Spherics-Signale von "echten" Spherics-Signalen getrennt werden. Dies kann bei Vorhandensein mehrerer Spherics-Empfänger in der Meßstation beispielsweise dadurch geschehen, daß nur von allen Spherics-Empfängern gleichzeitig empfangene Signale weiterverarbeitet werden.

Des Weiteren kann im digitalen Signalprozessor 22 auch ein von den Spherics-Signalen abgeleitetes interpretiertes Signal generiert werden, das beispielsweise als Datenwort mit einem durch Interpretation der Spherics-Signale gewonnenen Informationsinhalt, beispielsweise mit dem Informationsinhalt "Kaltfront am Ort x" oder "Kaltfront am Ort der Meßstation im Entstehen" über eine Übertragungseinrichtung 5 an die zentrale Auswerteeinheit 6 übertragen werden kann.

Die Algorithmen zur digitalen Signalverarbeitung sind im Signalprozessor 20 in einem EPROM abgelegt und können über ein in der Übertragungseinrichtung 5 vorhandenes Modem frei aktualisiert werden. Diese Algorithmen umfassen beispielsweise bei Meßstationen mit nur einem Spherics-Empfänger einen Algorithmus zur digitaltechnischen Trennung der Spherics-Signale von technischen Störsignalen (Diskriminator), die vom analogen Filter der Signalaufbereitungsstufe 14 nicht ausgefiltert werden konnten.

Im digitalen Signalprozessor 22 ist außerdem ein Algorithmus zur Analyse der Spherics-Signale (Analysator) gespeichert. Diese Analyse kann dadurch erfolgen, daß beispielsweise in festen zeitlichen Meßintervallen, beispielsweise in einem Meßintervall von 1 Minute Dauer, alle Spherics-Signale identifizierten empfangenen Signale in definierten Spektral-Intervallen, beispielsweise in den Intervallen 1 bis 10 kHz, 10 bis 20 kHz, 20 bis 30 kHz, 30 bis 50 kHz, 50 bis 100 kHz, 100 bis 200 kHz, 200 bis 500 kHz, analysiert werden. Hierzu werden die spektralen Leistungsdichten in diesen Spektralbereichen über das entsprechende Zeitintervall integriert und die Anzahl der Impulse in diesem Zeitintervall bestimmt. Eine feste Anzahl von solchen Meßintervallen (beispielsweise 15) wird zu je einem Übertragungsintervall zusammengefaßt, nach dessen Ablauf die dabei erhobenen Daten zur weiteren Verarbeitung und Archivierung an die zentrale Auswerteeinheit 6 übermittelt werden.

Im Signalprozessor 22 können außerdem die empfangenen Spherics-Signale so weit verarbeitet und analysiert werden, daß sie in einem vorgegebenen Klassifizierungsschema einer Aktivitätsklasse zugeordnet werden können und nach Ablauf eines Übertragungsintervalls nur noch eine Übertragung der Aktivititätsklasse vorgenommen werden muß. Unter Aktivitätsklasse ist dabei die Zusammenfassung der Meßwerte eines Meßintervalls nach einem als typisch erkannten Muster zu verstehen.

Durch diese Maßnahme wird der Umfang der zu übertragenden Daten deutlich verringert.

Im Ausführungsbeispiel ist außerdem ein UHF/VHF-Empfänger 28 vorgesehen, mit dem im HF-Bereich die Fernsehübertragungssignale normaler Fernsehsender empfangen werden können. Dies ermöglicht eine ergänzende Analyse und Interpretation des Wettergeschehens mit Hilfe von elektromagnetischen Signalen im HF-Bereich.

Außerdem ist bei der im Ausführungsbeispiel näher erläuterten Meßstation ein Meßsystem 30 zum Erfassen der aktuellen räumlichen Position, beispielsweise ein GPS-Empfangssystem, vorgesehen, mit dem der aktuelle Ort der Meßstation bestimmt werden kann. Dies ist beispielsweise bei nicht stationären Meßstationen von Vorteil.

### Bezugszeichenliste

- 2,4: Meßstation
- 4: Meßstation
- 6: Auswerteeinheit
- 5: Übertragungseinrichtung
- 8: Peilsender
- 10a,b: Spherics-Empfänger
- 11: Verarbeitungseinrichtung
- 12: VLF-Empfänger
- 14: Signalaufbereitungsstufe
- 16: steuerbares Filter
- 18: Meßwertaufnehmer
- 20: Multiplexer
- 22: Signalprozessor
- 28: UHF/VHF-Empfänger
- 30: Meßsystem zum Erfassen der aktuellen räumlichen Position
- 110,112,114: magnetische VLF-Antenne
- 116: Dipolantenne
- 120: Rundfunkantenne
- E: atmosphärisches Ereignis
- a: Abstand
- x,y: Ort

## Patentansprüche

1. Elektromagnetisches Meßsystem für die Meteorologie, mit einer Mehrzahl von Meßstationen (2,4), die räumlich verteilt in einem vorgegebenen Raumgebiet angeordnet sind, und die jeweils zumindest einen Spherics-Empfänger (10a,10b) zum Empfangen eines Spherics-Signales und eine Übertragungseinrichtung (5) zum Übermitteln von in der Meßstation (2,4) jeweils vorliegenden und aus den Spherics-Signalen abgeleiteten Meßdaten an eine den Meßstationen (2,4) zugeordnete zentrale Auswerteeinheit (6) enthalten, wobei der mittlere Abstand (a) jeweils benachbarter Meßstationen (2,4) zur flächendeckenden Erfassung kurzreichweitiger Spherics-Signale weniger als 50 km beträgt.

2. Elektromagnetisches Meßsystem nach Anspruch 1, bei dem der mittlere Abstand (a) weniger als 30 km beträgt.

3. Elektromagnetisches Meßsystem nach Anspruch 1 oder 2, bei dem in der Meßstation (2,4) eine Verarbeitungseinheit (11) zum Ableiten von Meßdaten aus den empfangenen Spherics-Signalen vorgesehen ist.

4. Elektromagnetisches Meßsystem nach Anspruch 3, bei dem die Verarbeitungseinheit (11) einen digitalen Signalprozessor (22) zum digitalen Verarbeiten der empfangenen Spherics-Signale umfaßt, dem ein A/D-Wandler (24) vorgeschaltet ist.

5. Elektromagnetisches Meßsystem nach Anspruch 4, bei dem der digitale Signalprozessor (22) zum Durchführen einer Spektralanalyse der Spherics-Signale vorgesehen ist.

6. Elektromagnetisches Meßsystem nach Anspruch 4 oder 5, bei dem der Signalprozessor (22) zum Durchführen einer Zeitreihenanalyse aufeinanderfolgender Spherics-Signale vorgesehen ist.

7. Elektromagnetisches Meßsystem nach einem der Ansprüche 4 bis 6, bei dem der Signalprozessor (22) zum Bewerten der analysierten Spherics-Signale anhand vorgegebener Bewertungskriterien vorgesehen ist.

8. Elektromagnetisches Meßsystem nach einem der Ansprüche 4 bis 7, bei dem die zur Durchführung der Analyse der Spherics-Signale erforderliche Software im Signalprozessor (22) von der zentralen Auswerteeinheit (6) ferngewartet ist.

9. Elektromagnetisches Meßsystem nach einem der Ansprüche 1 bis 8, bei dem der digitale Signalprozessor (22) zur Trennung von Spherics-Signalen und technischen Störsignalen vorgesehen ist.

10. Elektromagnetisches Meßsystem nach einem der vorhergehenden Ansprüche, bei dem dem zumindest eine magnetische VLF-Antenne (110,112,114) enthaltenden Spherics-Empfänger (10a, 10b) eine Signalaufbereitungsstufe (14) mit einem analogen Filter nachgeschaltet ist.

11. Elektromagnetisches Meßsystem nach einem der vorhergehenden Ansprüche, bei dem die zentrale Auswerteeinheit (6) Mittel zum Bestimmen des Ortes einer Spherics-Quelle durch Auswertung der Meßdaten zumindest benachbarter Meßstationen (2,4) umfaßt.

12. Elektromagnetisches Meßsystem nach einem der vorhergehenden Ansprüche, bei dem zum Bestimmen der Ausrichtung der Spherics-Empfänger (10a,10b) ein zentraler Peilsender (8) vorgesehen ist.

13. Elektromagnetisches Meßsystem nach einem der vorhergehenden Ansprüche, bei dem der Spherics-Empfänger (10a,10b) zwei horizontale und zueinander senkrecht ausgerichtete magnetische VLF-Antennen (112,114) enthält.

14. Elektromagnetisches Meßsystem nach Anspruch 13, bei dem zumindest in einem Teil der Meßstationen (2) der Spherics-Empfänger (10a) eine vertikal ausgerichtete magnetische VLF-Antenne (110) enthält.

15. Elektromagnetisches Meßsystem nach Anspruch 13 oder 14, bei dem der Spherics-Empfänger (10a,10b) zumindest in einem Teil der Meßstationen (2,4) eine Dipol-Antenne (116) zum Messen einer Komponente eines elektrischen Feldes umfaßt.

16. Elektromagnetisches Meßsystem nach Anspruch 15, bei dem die Dipol-Antenne (116) zum Messen der Vertikalkomponente des elektrischen Feldes vorgesehen ist.

17. Elektromagnetisches Meßsystem nach einem der vorhergehenden Ansprüche, bei dem zumindest ein Teil der Meßstationen (2,4) einen breitbandigen VLF-Empfänger (12) mit einer Rundfunkantenne (120) zum Empfangen langwelliger Rundfunksignale enthält.

18. Elektromagnetisches Meßsystem nach Anspruch 17, bei dem zur Überwachung der Ausrichtung der Rundfunkantenne (120) der zentrale Peilsender (8) vorgesehen ist.

19. Elektromagnetisches Meßsystem nach einem der vorhergehenden Ansprüche, bei dem die Meßstation (2,4) zumindest einen weiteren Meßwertaufnehmer (18) zum Erfassen einer weiteren lokalen Meßgröße umfaßt.

20. Elektromagnetisches Meßsystem nach einem der vorhergehenden Ansprüche, bei dem die Meßstation (2,4) eine Selbsttesteinrichtung (26) zum Test des Spherics-Empfängers (10a,10b) umfaßt.

21. Elektromagnetisches Meßsystem nach einem der vorhergehenden Ansprüche, bei dem zumindest ein Teil der Meßstationen (2,4) ein Meßsystem (30) zum Erfassen ihrer aktuellen räumlichen Position umfaßt.

22. Elektromagnetisches Meßsystem nach einem der vorhergehenden Ansprüche, bei dem die Übertragungseinrichtung (5) ereignisgesteuert aktivierbar ist.

23. Elektromagnetisches Meßsystem nach einem der vorhergehenden Ansprüche, bei dem die Übertragungseinrichtung (5) zeitgesteuert aktivierbar ist.

24. Elektromagnetisches Meßsystem nach einem der vorhergehenden Ansprüche, bei dem zumindest ein Teil der Meßstationen (2,4) einen UHF/VHF-Empfänger (28) enthält.

25. Elektromagnetisches Meßsystem nach einem der vorhergehenden Ansprüche, bei dem zumindest ein Teil der Meßstationen (2,4) ein Array jeweils gleichartiger Spherics-Empfänger (10a,10b) umfaßt, die in vorgegebenen Abständen zueinander angeordnet sind.

26. Elektromagnetisches Meßsystem nach Anspruch 25, bei dem der Abstand der Spherics-Empfänger (10a,10b) in einer Meßstation (2,4) zwischen 1 und 20 m beträgt.

## Claims

1. An electromagnetic measuring system for meteorology, comprising a plurality of measuring stations (2, 4) disposed distributed spatially in a predetermined region of space, each of said measuring stations having at least one spherics receiver (10a, 10b) for receiving spherics signals and a transmitter means (5) for transmitting measuring data present in said measuring station (2, 4) and derived from the received spherics signals to a central evaluation unit (6) associated with said measuring stations, wherein the mean spacing (a) of respectively neighbouring measuring stations (2, 4) being less than 50 km to provide area-covering detection of short-range spherics signals.

2. The electromagnetic measuring system according to claim 1, wherein said mean spacing (a) is less than 30 km.

3. The electromagnetic measuring system according to claim 1, wherein said measuring station (2, 4) has a processing unit (11) for deriving the measured data from the received spherics signals.

4. The electromagnetic measuring system according claim 3, wherein said processing unit (11) has a digital signal processor (22) for digitally processing the spherics signals received and an A/D converter (24) connected upstream of said digital signal processor.

5. The electromagnetic measuring system according to claim 4, wherein said digital signal processor (22) is provided for carrying out a spectral analysis of the spherics signals.

6. The electromagnetic measuring system according claim 4, wherein said digital signal processor (22) is provided for carrying out out a time-series analysis of successive spherics signals.

7. The electromagnetic measuring system according to one of claims 4 to 6, wherein said digital signal processor (22) is provided for appraising the spherics signals that have been analyzed with an aid of prescribed appraisal criteria.

8. The electromagnetic measuring system according to one of claims 1 to 7, wherein the software for carrying out an analysis of the spherics signals in said digital signal processor (22) is remote-serviced by said central evaluation unit (6).

9. The electromagnetic measuring system according to one of claims 1 to 8, wherein said digital signal processor (22) is provided for separating the spherics signals from technical noise signals.

10. The electromagnetic measuring system according to one of the previous claims, wherein said at least one spherics receiver (10a, 10b) comprising at least one magnetic VLF antenna (110, 112, 114) has a signal conditioning stage (14) with a connected downstream analog filter.

11. The electromagnetic measuring system according to one of the previous claims, wherein said central evaluation unit (6) has a means for determining the location of a spherics source by evaluating the measured data of at least neighbouring measuring stations (2, 4).

12. The electromagnetic measuring system according to one of the previous claims, including a central direction-finding transmitter (8) for determining an alignment of said spherics receivers (10a, 10b).

13. The electromagnetic measuring system according to one of the previous claims, wherein said spherics receiver (10a, 10b) comprises two horizontal and mutually perpendicularly aligned magnetic VLF antennas (112, 114).

14. The electromagnetic measuring system according to claim 13, wherein in at least some of said measuring stations (2) said spherics receiver (10a) comprises a vertically aligned magnetic VLF antenna (110).

15. The electromagnetic measuring system according to claim 13 or 14, wherein in at least some of said measuring stations (2) said spherics receiver (10a, 10b) comprises a dipole antenna (116) for measuring a component of an electric field.

16. The electromagnetic measuring system according to claim 15, wherein said dipole antenna (116) is provided for measuring a vertical component of the electric field.

17. The electromagnetic measuring system according to one of the previous claims, wherein at least some of said measuring stations (2, 4) are provided with a broadband VLF receiver (12) having a broadcast antenna (120) for receiving longwave broadcast signals.

18. The electromagnetic measuring system according to claim 17, wherein the central direction finding transmitter (8) is provided for monitoring the alignment of said broadcast antenna (120).

19. The electromagnetic measuring system according to one of the previous claims, wherein said measuring station (2, 4) includes at least one further sensor (18) for detecting a further local measurand.

20. The electromagnetic measuring system according to one of the previous claims, wherein said measuring station (2, 4) contain a self-testing device (26) for testing said spherics receiver (10a, 10b).

21. The electromagnetic measuring system according to one of the previous claims, wherein at least some of said measuring stations (2, 4) have a measuring system (30) for detecting their current spatial position.

22. The electromagnetic measuring system according to one of the previous claims, wherein said transmitter (5) can be activated in an event-controlled fashion.

23. The electromagnetic measuring system according to one of the previous claims, wherein said transmitter (5) can be activated in a time-controlled fashion.

24. The electromagnetic measuring system according to one of the previous claims, wherein at least some of said measuring stations (2, 4) have a UHF/VHF receiver.

25. The electromagnetic measuring system according to one of the previous claims, wherein at least some of said spherics receivers (2, 4) comprises an array of respectively similar spherics receivers (10a, 10b) disposed at predetermined spacings from one another.

26. The electromagnetic measuring system according to claim 25, wherein said predetermined spacing of said spherics receivers is between 1 and 20 m.

## Revendications

1. Système de mesure électromagnétique pour la météorologie, comprenant une pluralité de stations de mesure (2, 4) qui sont réparties spatialement dans une zone spatiale prédéterminée, chaque station de mesure (2, 4) et qui comprennent chacune au moins un récepteur de parasites atmosphériques (10a, 10b) servant à recevoir un signal de parasites atmosphériques et un dispositif de transmission (5) servant à la transmission de données de mesure respectives présentes dans la station de mesure (2, 4) et dérivées des signaux de parasites atmosphériques à une unité d'évaluation (6) centrale affectée aux stations de mesure (2, 4), l'espacement moyen (a) séparant chaque fois deux stations de mesure (2, 4) voisines étant inférieure à 50 km pour la détection sur une grande surface de signaux parasites atmosphériques de courte portée.

2. Système de mesure électromagnétique selon la revendication 1, dans lequel l'espacement moyen (a) est inférieur à 30 kilomètres.

3. Système de mesure électromagnétique selon la revendication 1 ou 2, dans lequel une unité de traitement (11) est prévue dans la station de mesure (2, 4) pour dériver des données de mesure des signaux de parasites atmosphériques reçus.

4. Système de mesure électromagnétique selon la revendication 3, dans lequel l'unité de traitement comprend un processeur de signaux numériques (22) pour le traitement numérique des signaux de parasites atmosphériques reçus et en amont duquel est monté un convertisseur analogique - numérique (24).

5. Système de mesure électromagnétique selon la revendication 4, dans lequel le processeur de signaux numériques (22) est prévu pour effectuer une analyse spectrale des signaux de parasites atmosphériques.

6. Système de mesure électromagnétique selon la revendication 4 ou 5, dans lequel le processeur de signaux numériques (22) est prévu pour effectuer une analyse de série temporelle de signaux de parasites atmosphériques successifs.

7. Système de mesure électromagnétique selon l'une quelconque des revendications 4 à 6, dans lequel le processeur de signaux numériques (22) est prévu pour évaluer à l'aide de critères d'évaluation prescrits les signaux de parasites atmosphériques qui ont été analysés.

8. Système de mesure électromagnétique selon l'une quelconque des revendications 4 à 7, dans lequel le logiciel nécessaire dans le processeur de signaux (22) pour effectuer l'analyse des signaux de parasites atmosphériques est entretenu par télémaintenance à partir de l'unité centrale d'évaluation (6).

9. Système de mesure électromagnétique selon l'une quelconque des revendications 1 à 8, dans lequel le processeur de signaux numérique (22) est prévu pour séparer des signaux de parasites atmosphériques et des signaux de bruit techniques.

10. Système de mesure électromagnétique selon l'une quelconque des revendications précédentes, dans lequel un étage de conditionnement de signal (14) comprenant un filtre analogique est monté en aval du récepteur de parasites atmosphériques (10a, 10b) contenant au moins une antenne VLF (110, 112, 114).

11. Système de mesure électromagnétique selon l'une quelconque des revendications précédentes, dans lequel l'unité d'évaluation centrale (6) possède un moyen pour déterminer l'emplacement d'une source de parasites atmosphériques par évaluation des données de mesure d'au moins des stations de mesure voisines (2, 4).

12. Système de mesure électromagnétique selon l'une quelconque des revendications précédentes, dans lequel un émetteur de repérage (8) central est prévu pour déterminer l'orientation du récepteur de parasites atmosphériques (10a, 10b).

13. Système de mesure électromagnétique selon l'une quelconque des revendications précédentes, dans lequel le récepteur de parasites atmosphériques (10a, 10b) possède deux antennes VLF (112, 114) horizontales et orientées perpendiculairement entre elles.

14. Système de mesure électromagnétique selon la revendication 13, dans lequel le récepteur de parasites atmosphériques (10a) comprend au moins dans une partie des stations de mesure (2) une antenne VLF magnétique (110) dirigée verticalement.

15. Système de mesure électromagnétique selon la revendication 13 ou 14, dans lequel le récepteur de parasites atmosphériques (10a, 10b) d'au moins une partie des stations de mesure (2, 4) possède une antenne dipôle (116) pour mesurer une composante d'un champ électrique.

16. Système de mesure électromagnétique selon la revendication 15, dans lequel l'antenne dipôle (116) est prévue pour mesurer la composante verticale du champ électrique.

17. Système de mesure électromagnétique selon l'une quelconque des revendications précédentes, dans lequel au moins une partie des stations de mesure (2, 4) possèdent un récepteur VLF à bande large (12) comprenant une antenne radioélectrique (120) servant à recevoir des signaux radioélectriques de grande longueur d'onde.

18. Système de mesure électromagnétique selon la revendication 17, dans lequel l'émetteur de repérage central (8) est prévu pour surveiller l'orientation de l'antenne radioélectrique (120).

19. Système de mesure électromagnétique selon l'une quelconque des revendications précédentes, dans lequel la station de mesure (2, 4) comprend au moins un autre moyen d'enregistrement de valeur de mesure (18) servant à relever une autre grandeur de mesure locale.

20. Système de mesure électromagnétique selon l'une quelconque des revendications précédentes, dans lequel la station de mesure (2, 4) comprend un dispositif d'autocontrôle (26) servant à tester le récepteur de parasites atmosphériques (10a, 10b).

21. Système de mesure électromagnétique selon l'une quelconque des revendications précédentes. dans lequel au moins une partie des stations de mesure (2, 4) comprennent un système de mesure (30) servant à relever leur position spatiale actuelle.

22. Système de mesure électromagnétique selon l'une quelconque des revendications précédentes, dans lequel le dispositif de transmission (5) peut être activé suivant un mode de commande événementiel.

23. Système de mesure électromagnétique selon l'une quelconque des revendications précédentes, dans lequel le dispositif de transmission (5) peut être activé suivant un mode de commande temporel.

24. Système de mesure électromagnétique selon l'une quelconque des revendications précédentes, dans lequel au moins une partie des stations de mesure (2, 4) possèdent un récepteur UHF / VHF (28).

25. Système de mesure électromagnétique selon l'une quelconque des revendications précédentes, dans lequel au, moins une partie des stations de mesure (2, 4) comprennent une matrice de récepteurs de parasites atmosphériques (10a, 10b) individuels de même type qui sont disposés les uns par rapport aux autres suivant des espacements prescrits.

26. Système de mesure électromagnétique selon la revendication 25, dans l'espacement des récepteurs de parasites atmosphériques (10a, 10b) dans une station de mesure (2, 4) est compris entre 1 et 20 m.
